# FASCICULE DE BREVET EUROPEEN

(11) **EP 2 795 857 B1**
(45) Date de publication et mention de la délivrance du brevet: **30.08.2017**
(21) Numéro de dépôt: 12816727.7
(22) Date de dépôt: 19.12.2012
(51) Int. Cl.: G06F 13/42, H04L 25/02, H04B 15/00, H04L 5/14

(54) **PROCÉDÉ DE COMMUNICATION ENTRE AU MOINS UN PREMIER SYSTÈME ET AU MOINS UN DEUXIÈME SYSTÈME AU MOYEN D'UNE CONNEXION SERIE FULL DUPLEX SYNCHRONE**
VERFAHREN ZUR KOMMUNIKATION ZWISCHEN WENIGSTENS EINEM ERSTEN SYSTEM UND WENIGSTENS EINEM ZWEITEN SYSTEM MITTELS EINER SERIELLEN SYNCHRONEN VOLLDUPLEX-VERBINDUNG
METHOD OF COMMUNICATION BETWEEN AT LEAST A FIRST SYSTEM AND AT LEAST A SECOND SYSTEM BY MEANS OF A SERIAL SYNCHRONUS FULL DUPLEX LINK

(30) Priorité: 19.12.2011 FR 1161961
(43) Date de publication de la demande: 29.10.2014
(73) Titulaire: Valeo Systèmes de Contrôle Moteur, 95800 Cergy (FR)
(72) Inventeur: BECQUET, Valéry, F-80540 Molliens-Dreuil (FR); GAROT, Olivier, F-95490 Vaureal (FR)
(74) Mandataire: Cardon, Nicolas
(86) Numéro de dépôt international: PCT/FR2012/052989
(87) Numéro de publication internationale: WO 2013/093336

(56) Documents cités:
- EP-A- 2 343 807
- EP-A1- 0 042 976
- US-A- 4 002 847
- US-A- 5 675 811
- US-B1- 6 178 206

## Description

La présente invention concerne la communication entre au moins un premier système et au moins un deuxième système grâce à une liaison série synchrone full duplex.

Au sens de la présente invention, une liaison full duplex est une liaison permettant un échange de données bidirectionnel et de façon simultanée.

L'invention s'applique notamment mais non exclusivement pour la communication entre des systèmes impliqués dans la commande d'interrupteurs électroniques tels que des transistors.

Le premier et le deuxième système sont par exemple embarqués sur un véhicule automobile hybride ou électrique et peuvent être impliqués dans la commande d'un onduleur interposé entre la batterie et le moteur électrique du véhicule alimenté par cette batterie. L'onduleur peut également, ou en variante, faire partie d'un circuit onduleur/chargeur apte à être branché sur le réseau électrique pour charger la batterie.

Il est connu d'utiliser une liaison série synchrone full duplex pour communiquer entre deux systèmes.

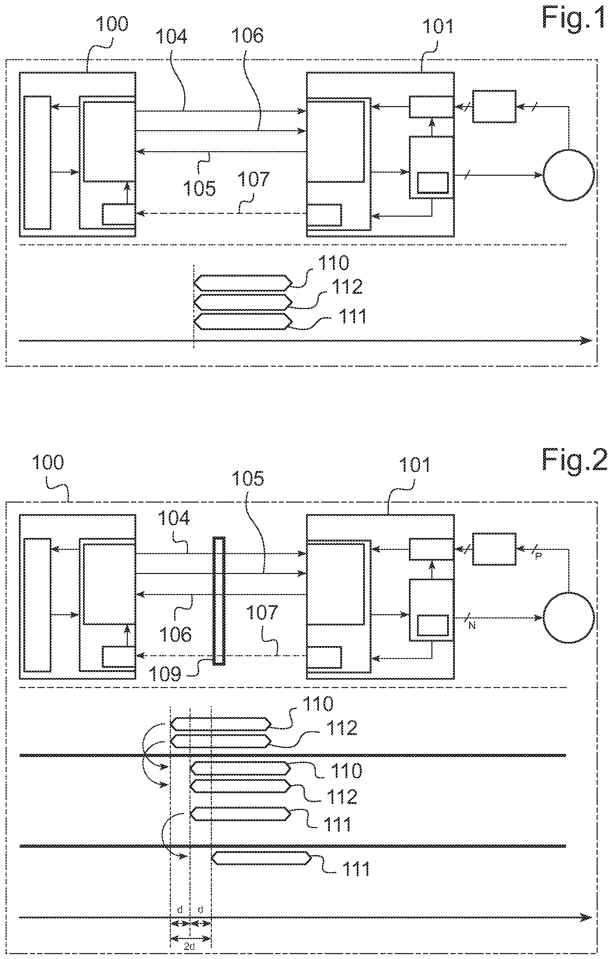

On a représenté sur la figure 1 un exemple connu de communication selon le protocole SPI (Serial Peripheral Interface) développé par la société Motorola^{R}. Une liaison série synchrone full duplex à un débit de 20 Mbits/s est établie entre un premier système 100 et un deuxième système 101 pour acheminer des données d'un système à l'autre. Dans l'exemple représenté, le premier système 100 comprend un microcontrôleur et le deuxième système 101 comprend un circuit programmable logique (encore appelé FPGA en anglais). Cette liaison comprend trois fils 104, 105 et 106 servant respectivement à acheminer un ou plusieurs messages 110 du premier système 100 au deuxième système 101, à acheminer un ou plusieurs messages 111 du deuxième système 101 au système premier 100 et à acheminer un signal d'horloge 112 généré par le premier système 100.

Au niveau de chaque fil, l'acheminement induit sur les données un retard qui peut être sensiblement constant d'un fil à l'autre. Le cas échéant, comme représenté sur la figure 1, un quatrième fil 107 peut être prévu pour permettre au deuxième système 101 de cadencer les séquences de communication.

Le retard induit par l'acheminement de données par la liaison doit être compatible avec le débit que l'on souhaite obtenir pour la communication full duplex, par exemple un débit d'au moins 5 Mbits/s, notamment 10 Mbits/s, voire de 20 Mbits/s.

Ce retard peut être d'autant plus important que la longueur de chaque fil est grande. Lorsque la longueur de fil n'est pas trop importante, le retard induit par la liaison peut devenir important lorsque celle-ci traverse une isolation galvanique interposée entre le premier système et le deuxième système.

On a représenté sur la figure 2 une telle situation. La mise en place d'une isolation galvanique 109 peut être souhaitable dans les applications automobiles citées ci-dessus pour protéger les composants très basse tension (TBT selon la norme IEC 60038, c'est-à-dire ayant une tension inférieure à 50V en alternatif et à 120 V en continu) des basses tensions (BT selon la norme IEC 60038, c'est-à-dire comprises entre 50 et 1000 V en alternatif et comprises entre 120 et 1500 V en continu) nécessaires à l'alimentation de la batterie ou du moteur électrique. Cette isolation galvanique 109 est par exemple obtenue à l'aide d'un transformateur.

La traversée par chaque fil 104 à 106 de la liaison de l'isolation 109 est susceptible de retarder les données acheminées par la liaison d'un retard ayant une valeur proche d'un quart de la période du signal d'horloge pour le débit souhaité. Dans l'exemple décrit, les données peuvent être retardées de 20 ns à 60 ns alors que le signal d'horloge a une période comprise entre 50 ns et 200 ns.

Ce retard, qu'il soit du à la présence de l'isolation galvanique 109, à la longueur de la liaison, voire aux deux, affecte le fonctionnement de la liaison puisque le premier système 100 ne reçoit pas de message du deuxième système 101 en phase avec le signal d'horloge 112 qu'il génère, de sorte qu'il ne peut pas échantillonner correctement ce message. De son côté, le deuxième système 101 reçoit un message 110 du premier système 100 qui n'est plus en phase avec le signal d'horloge 112 qu'il reçoit également, de sorte qu'il ne peut pas échantillonner correctement le message 110 qu'il reçoit.

L'emploi dans le cas de la figure 2 d'une isolation galvanique 109 à plusieurs canaux (un canal pour chaque fil) peut permettre au deuxième système 101 d'échantillonner correctement les messages qu'il reçoit du premier système 100. En effet, étant donné que chaque canal de l'isolation induit sensiblement le même retard aux données acheminées, le deuxième système 101 reçoit le message 110 envoyé par le premier système 100 sensiblement en phase avec le signal d'horloge 112.

En revanche, comme représenté sur la figure 2, le message 111 envoyé par le deuxième système 101 et le signal d'horloge 112 ne sont pas en phase, de sorte que le problème persiste du point de vue du premier système 100.

Une solution possible est de réduire le débit de la communication, par exemple à une valeur inférieure à 5 Mbits/s, et/ou de décaler l'envoi des messages par le système esclave.

Néanmoins, une telle solution ne permet pas des communications à un débit élevé, ce qui s'avère souhaitable dans de nombreuses applications, dont dans le domaine de l'automobile.

Par ailleurs, la demande de brevet européen publiée sous le numéro EP 2 343 807 A1 décrit de transmettre un signal d'horloge reçu par un récepteur d'une interface Ethernet à un transmetteur de cette interface Ethernet.

La présente invention a pour but de permettre de réaliser une liaison série synchrone full duplex permettant des débits élevés, notamment supérieurs à 5 Mbits/s, par exemple de l'ordre de 10 Mbits/s, voire de l'ordre de 20 Mbits/s, bien que cette liaison induise des retards sur les données acheminées par celle-ci.

L'invention y parvient, selon l'un de ses aspects, grâce à un procédé de communication entre au moins un premier système et au moins un deuxième système par l'intermédiaire d'une liaison série synchrone full duplex pouvant simultanément acheminer entre lesdits systèmes des données comprenant : au moins un message du premier système au deuxième système, au moins un message du deuxième système au premier système et un signal d'horloge,
procédé dans lequel:
- le deuxième système reçoit un message et un signal d'horloge envoyés par le premier système, retardés et sensiblement en phase,
- le deuxième système envoie au premier système au moins un message,
- le signal d'horloge reçu par le deuxième système est renvoyé au premier système avec ledit message envoyé par le deuxième système, et
- le premier système reçoit le message envoyé par le deuxième système et le signal d'horloge renvoyé, retardés et sensiblement en phase.

Le procédé ci-dessus permet d'obtenir une liaison série synchrone full duplex avec un haut débit sans que le retard induit par l'acheminement des données par la liaison n'empêche le premier système et le deuxième système d'échantillonner les messages qu'ils reçoivent de façon synchrone avec le signal d'horloge.

La liaison peut acheminer de façon simultanée le message envoyé par le deuxième système au premier système et le signal d'horloge renvoyé au premier système. Ces données arrivent en phase au niveau du premier système. Un retard sensiblement égal est appliqué par la liaison au message envoyé par le deuxième système au premier système et au signal d'horloge renvoyé au premier système. Ce retard peut être le même que celui appliqué par la liaison aux données acheminées du premier système vers le deuxième système. En variante, la liaison peut appliquer des retards différents d'un sens d'acheminement des données à l'autre.

Le premier système peut être maître, c'est-à-dire que c'est lui qui a l'initiative du déclenchement de la communication avec le deuxième système, ce deuxième système étant alors esclave.

En variante, le premier système est esclave et le deuxième système est maître.

La liaison série synchrone full duplex est avantageusement une liaison de type Serial Peripheral Interface (SPI). Dans le cadre de la communication, le signal d'horloge est généré par le premier système.

La liaison peut comporter trois fils disposés entre le premier système et le deuxième système et acheminant respectivement les messages du premier système au deuxième système, les messages du deuxième système au premier système et le signal d'horloge. Un quatrième fil peut être prévu entre une zone du troisième fil et le premier système pour renvoyer au premier système le signal d'horloge reçu par le deuxième système. Ladite zone est notamment à proximité du deuxième système, étant notamment plus proche du deuxième système que du premier système. Ladite zone peut se trouver à l'entrée, côté liaison, du deuxième système. Ladite zone peut être positionnée de manière à renvoyer au premier système un signal d'horloge sensiblement identique à celui reçu par le deuxième système.

Chaque fil peut ou non être unidirectionnel.

Selon un premier mode de mise en oeuvre de l'invention, une isolation galvanique est interposée entre le premier système et le deuxième système et la liaison série synchrone full duplex traverse cette isolation. Dans un tel cas, le retard induit par la liaison sur les données acheminées par celle-ci est causé en tout ou partie par cette isolation galvanique. Il s'agit par exemple d'un transformateur.

L'isolation galvanique est par exemple multicanaux, et chaque fil de la liaison est reçu dans un des canaux de l'isolation.

Selon ce premier mode de mise en oeuvre de l'invention, la zone du troisième fil au niveau de laquelle prend naissance le quatrième fil est disposée en aval de l'isolation galvanique lorsque l'on se déplace du premier système vers le deuxième système.

Selon un second mode de mise en oeuvre de l'invention, aucune isolation galvanique n'est traversée par la liaison série synchrone full duplex. La liaison a une longueur supérieure à quelques mètres, par exemple trois mètres, et le retard induit par la liaison sur les données acheminées par celle-ci est causé en tout ou partie par la longueur de la liaison.

Selon ce second mode de mise en oeuvre de l'invention, la zone du troisième fil au niveau de laquelle prend naissance le quatrième fil peut être plus proche, lorsque l'on parcourt la liaison, du deuxième système que du premier système. Ladite zone du troisième fil est notamment dans le tiers, notamment le quart, notamment le dixième, de la liaison le plus proche du deuxième système, la liaison comprenant trois tiers, notamment quatre quarts, notamment dix dixièmes. Le quatrième fil peut prendre naissance sur le troisième fil au niveau de l'entrée, côté liaison, du deuxième système.

Selon un troisième mode de réalisation, le retard induit par la liaison sur les données acheminées par celle-ci est en partie causé par la traversée d'une isolation galvanique et en partie causé par la longueur de la liaison.

Le procédé selon l'invention peut ainsi permettre d'assurer un bon fonctionnement de la liaison malgré le retard relativement important qu'elle peut induire, ce retard étant notamment de l'ordre de grandeur d'un quart de période du signal d'horloge pour le débit souhaité pour la communication.

La liaison série synchrone full duplex fonctionne de préférence selon un débit supérieur ou égal à 5 Mbits/s, notamment supérieur ou égal à 10 Mbits/s, étant notamment égal à 20 Mbits/s. La période du signal d'horloge est notamment inférieure à 200 ns, notamment inférieure à 100 ns, étant notamment de l'ordre de 50 ns

Le premier système peut comprendre un premier module half duplex chargé de l'émission de données sur la liaison et un deuxième module half duplex chargé de la réception des données acheminées par la liaison.

Le deuxième système peut comprendre un module full duplex chargé de la communication avec le premier système.

Avec un tel premier système et un tel deuxième système, un message est envoyé par le premier système en phase avec le signal d'horloge. Ces données traversent l'isolation galvanique et restent sensiblement en phase étant donné que la liaison, le cas échéant via l'isolation galvanique multicanaux, induit un même retard sur ces données, notamment sur chaque fil. Le module full duplex du deuxième système lit le message qu'il reçoit par rapport au signal d'horloge, ces données étant reçues en phase.

Le module full duplex du deuxième système peut ensuite envoyer un message vers le premier système en phase avec le signal d'horloge qu'il a reçu et qui est renvoyé au premier système. Ce message et le signal d'horloge renvoyés traversent l'isolation galvanique et arrivent retardés d'un même retard au niveau du deuxième module du premier système. Le deuxième module du premier système lit ensuite le message reçu par rapport au signal d'horloge reçu.

Chaque module peut recevoir un message en phase avec le signal d'horloge qu'il reçoit également, de sorte que le premier système et le deuxième système peuvent échantillonner de façon satisfaisante les données qu'ils reçoivent, même avec un débit supérieur à 5 Mbits/s, notamment supérieur à 10 Mbits/s, par exemple égal à 20 Mbits/s.

Selon l'invention, lorsqu'une isolation multicanaux est utilisée, il n'est pas nécessaire que cette isolation présente des performances particulières en termes de valeur de retard induit ou de précision quant à cette valeur de retard puisque ce retard est compensé par le renvoi du signal d'horloge. La seule contrainte porte sur le fait que, d'un canal à l'autre, un retard sensiblement égal soit induit par l'isolation galvanique pour chaque sens d'acheminement, voire même pour les deux sens d'acheminement.

Le premier système peut être maître. Lorsqu'il est maître, le premier système peut comprendre un circuit logique programmable (FPGA). Dans ce cas, le deuxième système est esclave et il peut comprendre un microcontrôleur ou microprocesseur. Dans ce cas, quatre fils seulement peuvent être utilisés pour réaliser la liaison, ce qui signifie que lorsqu'une isolation galvanique est prévue, seuls quatre fils doivent être isolés. Par rapport à la liaison représentée sur la figure 2, il n'est pas nécessaire d'avoir à isoler un fil supplémentaire reliant le premier système et le deuxième système pour le cadencement de la communication, ce cadencement étant effectué à l'aide du signal d'horloge émis par le premier module du premier système.

En variante, le premier système peut être esclave. Lorsqu'il est esclave, le premier système peut comprendre un microcontrôleur ou un microprocesseur et le deuxième système est alors maître et peut comprendre un FPGA. Dans ce cas, il peut être nécessaire de prévoir un fil supplémentaire pour le cadencement de la communication. Une isolation galvanique additionnelle, montée en parallèle de celle traversée par les quatre fils ci-dessus peut alors être prévue entre le premier système et le deuxième système.

Les données acheminées par la liaison peuvent comprendre des valeurs de rapport cyclique destinées à être appliquées à des interrupteurs d'un onduleur et des valeurs de courant mesuré. Les données acheminées par la liaison et autres que le signal d'horloge peuvent être constituées par les valeurs de rapport cyclique et les valeurs de courant mesuré mentionnées ci-dessus. En variante, la liaison peut acheminer des données autres en plus des signaux d'horloge, des valeurs de rapport cyclique et des valeurs de courant mesuré.

Dans une application du procédé, l'un du premier système et du deuxième système interagit avec un générateur de valeurs de rapport cyclique et l'autre du premier système et du deuxième système interagit avec un circuit électrique comprenant un onduleur et un moteur électrique.

Le premier système est par exemple maître et interagit par exemple avec le circuit électrique et le deuxième système est par exemple esclave et interagit avec le générateur de valeur des rapports cycliques.

Dans une variante, le système qui est esclave interagit avec le circuit électrique et le système qui est maître interagit avec le générateur de valeurs de rapport cyclique.

L'invention a encore pour objet, selon un autre de ses aspects, une liaison série synchrone full duplex entre au moins un premier système et au moins un deuxième système, la liaison comprenant :
- un premier fil s'étendant entre lesdits systèmes et permettant la transmission de message(s) du premier système au deuxième système,
- un deuxième fil s'étendant entre lesdits systèmes et permettant la transmission de message(s) du deuxième système au premier système, et
- un troisième fil s'étendant entre lesdits systèmes et permettant la transmission du signal d'horloge généré par le premier système au deuxième système,
la liaison comportant en outre un quatrième fil reliant une zone du troisième fil et le premier système.

Le quatrième fil permet notamment que le signal d'horloge envoyé par le premier système et reçu par le deuxième système retardé par la liaison soit renvoyé au premier système, ce qui permet d'obtenir les avantages mentionnés ci-dessus.

Tout ou partie des caractéristiques mentionnées ci-dessus en rapport avec le procédé de communication peuvent être combinées avec la définition ci-dessus de la liaison, notamment les caractéristiques relatives à la position de la zone du troisième fil au niveau de laquelle prend naissance le quatrième fil.

L'invention a encore pour objet, selon un autre de ses aspects, un système de communication isolé galvaniquement entre un premier système et un deuxième système, comprenant :
- la liaison définie ci-dessus, et
- une isolation galvanique traversée par la liaison, ladite zone du troisième fil étant disposée en aval de l'isolation lorsque l'on parcourt la liaison du premier système vers le deuxième système.

Le quatrième fil permet ainsi que le signal d'horloge, qui a subi en traversant l'isolation le même retard que le message envoyé par le premier système au deuxième système, soit renvoyé vers le premier système et accompagne ainsi le message envoyé par le deuxième système au premier système. Ce message et ce signal d'horloge sont avantageusement reçus en phase par le premier système, retardés d'un même retard égal ou non au retard appliqué par la liaison aux données acheminées du premier système vers le deuxième système..

L'invention a encore pour objet, selon un autre de ses aspects, un ensemble comprenant :
- le système de communication défini ci-dessus,
- un premier système maître, comprenant notamment un circuit logique programmable (FPGA), et
- un deuxième système esclave,
la liaison étant dépourvue de fil autre que le premier, deuxième, troisième et quatrième fil.

L'invention a encore pour objet, selon un autre de ses aspects, un ensemble comprenant :
- le système de communication défini ci-dessus,
- un premier système esclave, comprenant notamment un microcontrôleur ou un microprocesseur, et
- un deuxième système maître,
la liaison comportant un cinquième fil reliant le premier système et le deuxième système et traversant l'isolation galvanique.

L'isolation galvanique peut être réalisée à l'aide d'un isolateur comprenant cinq canaux, auquel cas, un même isolateur est traversé par les cinq fils.

En variante, l'isolation galvanique comprend deux parties disposées en parallèle, la première partie étant traversée par les premier, deuxième, troisième et quatrième fils et la deuxième partie étant traversée par le cinquième fil.

En variante, encore le premier et le troisième fil traversent une première partie de l'isolation, cette partie induisant un premier retard, et le deuxième et le quatrième fil traversent une deuxième partie de l'isolation, cette deuxième partie induisant un deuxième retard différent du premier retard. Le cinquième fil peut traverser l'une ou l'autre de ces deux parties de l'isolation ou une troisième partie de l'isolation distincte des première et deuxième parties.

L'invention pourra être mieux comprise à la lecture de la description qui va suivre d'exemples non limitatifs de mise en oeuvre de celle-ci et à l'examen du dessin annexé sur lequel :
- les figures 1 et 2 représentent une liaison série synchrone full duplex selon l'art antérieur déjà décrite,
- la figure 3 représente un ensemble selon un premier mode de réalisation de l'invention,
- la figure 4 illustre une séquence de communication avec l'ensemble de la figure 3,
- la figure 5 représente un ensemble selon un deuxième mode de réalisation de l'invention et,
- la figure 6 illustre une séquence de communication avec l'ensemble de la figure 5.

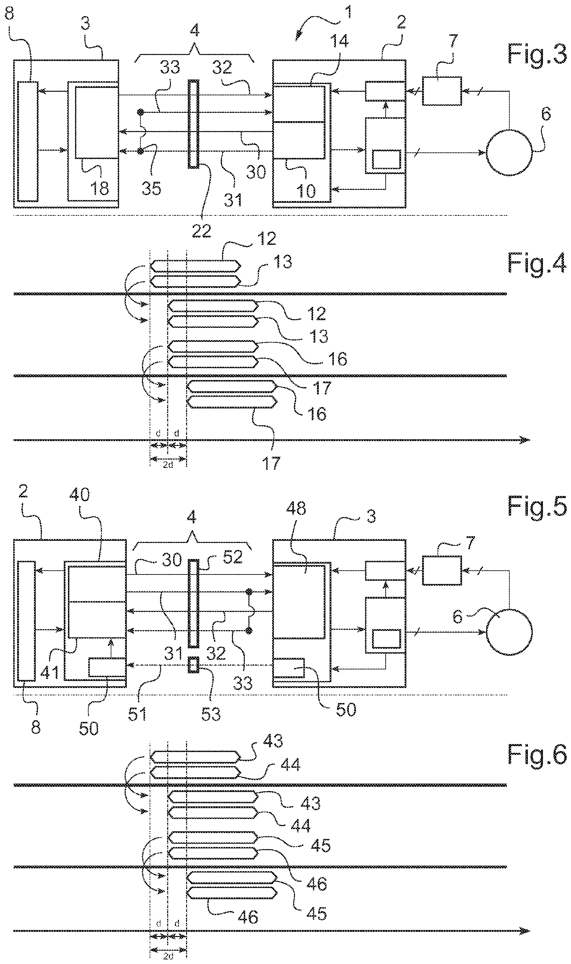

On a représenté à la figure 3 un ensemble 1 au sein duquel des procédés selon des exemples de mise en oeuvre de l'invention peuvent être effectués.

L'ensemble 1 comprend dans l'exemple de la figure 3 un premier système 2 et un deuxième système 3 échangeant des données par l'intermédiaire d'une liaison série synchrone full duplex 4.

Dans l'exemple considéré, l'ensemble 1 est embarqué sur un véhicule qui comprend un circuit électrique comportant un moteur électrique 6, une batterie et un onduleur interposé entre la batterie et le moteur électrique. Le circuit électrique peut comprendre un connecteur permettant de charger la batterie par l'intermédiaire d'un réseau électrique.

L'ensemble 1 fait dans l'exemple considéré partie d'un dispositif de commande des interrupteurs de l'onduleur.

Le premier système 2 est par exemple un périphérique interagissant avec l'onduleur pour commander les interrupteurs de l'onduleur et avec le moteur électrique 6 pour mesurer le courant circulant dans chaque phase du stator du moteur 6, ce dernier étant notamment polyphasé, par exemple triphasé.

Le premier système 2 envoie par exemple des valeurs de rapport cyclique aux interrupteurs de l'onduleur et reçoit, après passage par un convertisseur analogique/numérique 7, des valeurs des courants mesurés dans les phases du stator du moteur 6.

Le deuxième système 3 communique dans l'exemple considéré avec un générateur 8 de valeurs de rapport cyclique en fonction de valeurs de courant. Ce générateur 8 met par exemple en oeuvre un traitement logiciel.

Le premier système 2 est maître dans l'exemple des figures 3 et 4 et il est réalisé dans cet exemple à l'aide d'un circuit logique programmable (FPGA). Le système maître 2 comprend dans cet exemple deux modules associés à la liaison 4, chaque module étant un module half duplex. Un premier module 10 est responsable de l'envoi de message 12 vers le deuxième système 3 qui est ici esclave et de l'envoi d'un signal d'horloge 13 avec lequel le message 12 est synchronisé.

Un deuxième module 14 est responsable de la réception de message 16 envoyé par le deuxième système 3 et de signaux d'horloge 17, comme on le verra par la suite.

La liaison 4 peut être de type SPI, auquel cas chaque module 10 et 14 est un contrôleur SPI half duplex.

Le deuxième système 3 comprend dans l'exemple considéré un seul module 18 associé à la liaison 4. Ce module 18 est un module full duplex, envoyant des messages 16 au premier système 2 et réceptionnant les messages 12 envoyés par le premier système. Ce module reçoit également le signal d'horloge 13 généré par le premier système 2. Lorsque la communication s'effectue via une liaison 4 de type SPI, le module 18 est un contrôleur SPI full duplex.

La liaison 4 permet dans l'exemple considéré l'envoi par le premier système 2 de valeurs de courant au deuxième système 3 et l'envoi par le deuxième système 3 de valeurs de rapport cyclique générées sur la base de ces valeurs de courant par le générateur 8.

La liaison 4 est dans l'exemple de la figure 3 constituée par quatre fils 30 à 33. Le fil 30 est responsable de l'acheminement des messages 12 du premier système 2 au deuxième système 3. Le fil 31 est responsable de l'acheminement du signal d'horloge généré par le premier système 2 au deuxième système 3. Le fil 32 est responsable de l'acheminement des messages 16 du deuxième système 3 au premier système 2. Un quatrième fil 33 est prévu, ce fil 33 reliant une zone 35 du fil 31 et le premier système 2. Le quatrième fil 33 joue le rôle de retour pour le fil 31.

Dans l'exemple de la figure 3, le premier système 2 est galvaniquement isolé par rapport au deuxième système 3. Cette isolation galvanique 22 est ici réalisée par l'intermédiaire d'un transformateur mais l'invention n'est pas limitée à une réalisation particulière de l'isolation galvanique. L'isolation galvanique 22 est dans cet exemple une isolation multicanaux, chaque fil 30 à 33 étant reçu dans un canal propre de l'isolation 22.

Comme représenté sur la figure 3, la zone 35 du fil 31 à partir de laquelle s'étend le quatrième fil 33 peut être située en aval de l'isolation 22 lorsque l'on parcourt la liaison 4 du premier système 2 vers le deuxième système 3. Cette zone 35 est par exemple située au plus proche du deuxième système 3, de manière à renvoyer au premier système 2 un signal d'horloge sensiblement identique à celui reçu par le deuxième système 3.

La séquence de communication illustrée sur la figure 4 avec l'ensemble de la figure 3 va maintenant être décrite.

Un message 12 est envoyé par le premier système 2 qui est ici maître via son module 10 au deuxième système 3 qui est ici esclave. Ce message 12 est synchronisé avec un signal d'horloge 13. La traversée de l'isolation galvanique 22 génère un retard d qui est sensiblement le même pour le message 12 et le signal d'horloge 13. Dans les exemples décrits, un même retard d est appliqué par la liaison 4 aux données qu'elle achemine, indépendamment du sens d'acheminement. Dans des variantes, non représentées, un même retard d1 est appliqué par la liaison 4 aux données acheminées du premier système 2 vers le deuxième système 3, c'est-à-dire au message 12 et au signal d'horloge 13, tandis qu'un deuxième retard d2, différent du premier retard d1, est appliqué aux données acheminées du deuxième système 3 vers le premier système 2, c'est-à-dire au message 16 et au signal d'horloge 17. Cette différence peut être due à l'emploi d'isolateurs différents d'un sens d'acheminement à l'autre.

Le message 12 et le signal d'horloge 13 arrivent ensuite en phase au niveau du deuxième système 3. Le module 18 lit alors le message 12 par rapport au signal d'horloge 13.

Un message 16 est renvoyé par le deuxième système 3 au premier système 2. Grâce à la présence du quatrième fil 33 dans la liaison 4, un signal d'horloge 17, qui correspond en réalité dans l'exemple considéré au signal d'horloge 13 reçu par le module 18, est envoyé vers le premier système 2. Ce signal d'horloge 17 est en phase avec le message 16 envoyé par le deuxième système 3. La traversée de l'isolation galvanique 22 induit sur le message 16 et le signal d'horloge 17 un retard d qui est sensiblement égal pour ces deux données, et qui est également dans l'exemple considéré sensiblement égal au retard induit par l'isolation galvanique 22 lors de l'acheminement du premier système 2 vers le deuxième système 3 du message 12 et du signal d'horloge 13.

Le signal d'horloge 17 et le message 16 arrivent ensuite en phase au niveau du premier système 2. Le module 14 procède alors à la lecture du message 16 par rapport au signal d'horloge 17.

Comme on peut le voir sur la figure 4, le signal d'horloge 17 est dans l'exemple décrit retardé de deux fois le retard induit par la liaison 4 lorsqu'il est reçu par le module 14 par rapport au signal d'horloge 13 initialement émis par le module 10 mais ce retard ne perturbe pas la lecture du message 16 par le module 14.

On va maintenant décrire, en référence aux figures 5 et 6, un ensemble 1 selon un deuxième mode de réalisation de l'invention.

Cet ensemble 1 diffère de celui représenté à la figure 3 par le fait que le premier système 2 générant le signal d'horloge est esclave alors que le deuxième système 3 est maître. En outre, le premier système 2 interagit avec le générateur 8 de valeurs de rapport cyclique tandis que le deuxième système 3 interagit avec le moteur électrique 6 et avec le convertisseur analogique/numérique 7.

Le premier système 2 comprend dans cet exemple un microcontrôleur comportant deux modules half duplex 40 et 41, le premier module half duplex 40 étant chargé d'envoyer au deuxième système 3 des messages 43 et un signal d'horloge 44 tandis que le deuxième module half duplex 41 est chargé de recevoir des messages 45 envoyés par le deuxième système esclave et un signal d'horloge 46.

Le deuxième système 3 comprend dans l'exemple de la figure 5 un FPGA comportant un seul module full duplex 48 chargé de la communication via la liaison 4.

Comme représenté sur la figure 5, chaque système 2 ou 3 comprend dans cet exemple un module de synchronisation 50. Toujours dans cet exemple, la liaison comprend un cinquième fil 51 et l'isolation galvanique est en deux parties, une première partie multicanaux 52 est similaire à l'isolation 22 de la figure 3 et traversée par les fils 30 à 33 tandis qu'une deuxième isolation 53 est dédiée à l'isolation du cinquième fil 51. Ce cinquième fil 51 et les modules 50 permettent au deuxième système 3, qui est ici maître, de cadencer la communication.

Comme représenté sur la figure 6, similairement à ce qui a été décrit en référence à la figure 4, le premier système 2 envoie un message 43 et un signal d'horloge 44 qui sont reçus par le deuxième système 3 en phase et retardés d'un retard sensiblement égal d. Le deuxième système 3 renvoie un message 45 qui est accompagné par un signal d'horloge 46 généré grâce au retour formé par le quatrième fil 33. Le premier système 2 reçoit alors via son deuxième module 41 le message 45 et le signal d'horloge 46 à nouveau retardés d'un même retard, ici égal au retard d, et peut lire le message 45 par rapport au signal d'horloge 46.

L'invention n'est pas limitée aux exemples qui viennent d'être décrits.

En particulier, comme mentionné ci-dessus, l'invention n'implique pas nécessairement que la liaison applique aux données acheminées du premier système vers le deuxième système un retard égal à celui que la liaison applique aux données acheminées du deuxième système vers le premier système.

L'expression « comportant un » ou « comprenant un » doit être comprise comme signifiant « comportant au moins un » ou « comprenant au moins un », sauf lorsque le contraire est spécifié.

## Revendications

1. Procédé de communication entre au moins un premier système (2) et au moins un deuxième système (3) par l'intermédiaire d'une liaison série synchrone full duplex (4) pouvant simultanément acheminer entre lesdits systèmes (2, 3) des données comprenant : au moins un message (12 ; 43) du premier système (2) au deuxième système (3), au moins un message (16 ; 45) du deuxième système (3) au premier système (2) et un signal d'horloge (13 ; 44),
procédé dans lequel :
- le deuxième système (3) reçoit un message (12 ; 43) et un signal d'horloge (13 ; 44) envoyés par le premier système (2), retardés et sensiblement en phase,
- le deuxième système (3) envoie au premier système (2) un message (16 ; 45),
le procédé étant **caractérisé en ce que** :
- le signal d'horloge (13 ; 44) reçu par le deuxième système (3) est renvoyé (17 ; 46) au premier système (2) avec ledit message (16 ; 45) envoyé par le deuxième système (3), et
- le premier système (2) reçoit le message (16 ; 45) envoyé par le deuxième système (3) et le signal d'horloge (17 ; 46) renvoyé, retardés et sensiblement en phase.

2. Procédé selon la revendication 1, dans lequel la liaison est une liaison (4) de type Serial Peripheral Interface (SPI).

3. Procédé selon la revendication 1 ou 2, dans lequel le premier système (2) est maître et dans lequel le deuxième système (3) est esclave.

4. Procédé selon l'une quelconque des revendications 1 à 3, dans lequel une isolation galvanique (22 ; 52, 53) est interposée entre le premier système (2) et le deuxième système (3) et dans lequel la liaison série synchrone full duplex (4) traverse cette isolation.

5. Procédé selon l'une quelconque des revendications 1 à 3, dans lequel aucune isolation galvanique n'est traversée par la liaison série synchrone full duplex (4) et dans lequel la liaison (4) a une longueur supérieure à quelques mètres, notamment à trois mètres.

6. Procédé selon l'une quelconque des revendications 1 à 5, dans lequel la liaison série synchrone full duplex (4) a un débit supérieur ou égal à 5 Mbits/s, notamment à 10 Mbits/s, notamment de l'ordre de 20 Mbits/s.

7. Procédé selon l'une quelconque des revendications 1 à 6, dans lequel le premier système (2) est maître et comprend un circuit logique programmable (FPGA)

8. Procédé selon l'une quelconque des revendications 1 à 6, dans lequel le premier système (2) est esclave et comprend un microcontrôleur ou un microprocesseur.

9. Procédé selon l'une quelconque des revendications précédentes, dans lequel les données acheminées par la liaison (4) comprennent des valeurs de rapport cyclique destinées à être appliquées à des interrupteurs d'un onduleur et des valeurs de courant mesuré.

10. Procédé selon la revendication 9, dans lequel l'un du premier système (2) et du deuxième système (3) interagit avec un générateur (8) de valeurs de rapport cyclique et l'autre du premier système (2) et du deuxième système (3) interagit avec un circuit électrique comprenant un onduleur et un moteur électrique (6).

11. Liaison série synchrone full duplex (4) entre au moins un premier système (2) et au moins un deuxième système (3), la liaison (4) comprenant :
- un premier fil (30) s'étendant entre lesdits systèmes (2, 3) et permettant la transmission de message(s) (12 ; 43) du premier système (2) au deuxième système (3),
- un deuxième fil (32) s'étendant entre lesdits systèmes (2, 3) et permettant la transmission de message(s) (16 ; 45) du deuxième système (3) au premier système (2) et
- un troisième fil (31) s'étendant entre lesdits systèmes (2, 3) et permettant la transmission d'un signal d'horloge (13 ; 44) généré par le premier système (2) au deuxième système (3),
la liaison (4) étant **caractérisée en ce qu'**elle comporte en outre un quatrième fil (33) reliant une zone (35) du troisième fil (31) et le premier système (2) et permettant de renvoyer le signal d'horloge (13 ; 44) reçu par le deuxième système (3) au premier système (2) avec un message (16 ; 45) envoyé par le deuxième système (3) sur ledit deuxième fil, de sorte que le premier système (2) reçoit ledit message (16 ; 45) envoyé par le deuxième système (3) et le signal d'horloge (17 ; 46) renvoyé, retardés et sensiblement en phase.

12. Liaison selon la revendication 11, la zone (35) du troisième fil (31) étant positionnée sur le troisième fil (31) de manière à renvoyer au premier système (2) un signal d'horloge sensiblement identique à celui reçu par le deuxième système (3).

13. Système de communication isolé galvaniquement entre un premier système (2) et un deuxième système (3), comprenant :
- la liaison (4) selon la revendication 11 ou 12, et
- une isolation galvanique (22 ; 52, 53) traversée par la liaison, ladite zone (35) du troisième fil (31) étant disposée en aval de l'isolation (22 ; 52, 53) lorsque l'on parcourt la liaison (4) du premier système (2) vers le deuxième système (3).

14. Ensemble (1), comprenant :
- le système de communication selon la revendication 13,
- un premier système maître (2), comprenant notamment un circuit logique programmable (FPGA), et
- un deuxième système esclave (3),
la liaison (4) étant dépourvue de fil autre que le premier (30), deuxième (32), troisième (31) et quatrième (33) fil.

15. Ensemble (1), comprenant :
- le système de communication selon la revendication 13,
- un premier système esclave (2), comprenant notamment un microcontrôleur ou un microprocesseur, et
- un deuxième système maître (3),
la liaison (4) comportant un cinquième fil (51) reliant le premier système (2) et traversant l'isolation galvanique.

## Patentansprüche

1. Verfahren zur Kommunikation zwischen mindestens einem ersten System (2) und mindestens einem zweiten System (3) mittels einer synchronseriellen Full-Duplex-Verbindung (4), die gleichzeitig zwischen den Systemen (2, 3) Daten befördern kann, die enthalten: mindestens eine Nachricht (12; 43) des ersten Systems (2) an das zweite System (3), mindestens eine Nachricht (16; 45) des zweiten Systems (3) an das erste System (2) und ein Taktsignal (13; 44),
Verfahren, bei dem:
- das zweite System (3) eine Nachricht (12; 43) und ein Taktsignal (13; 44) empfängt, die vom ersten ersten System (2) geschickt werden, verzögert und im Wesentlichen in Phase,
- das zweite System (3) eine Nachricht (16; 45) an das erste System (2) schickt,
wobei das Verfahren **dadurch gekennzeichnet ist, dass**:
- das vom zweiten System (3) empfangene Taktsignal (13; 44) mit der vom zweiten System (3) geschickten Nachricht (16; 45) an das erste System (2) zurückgeschickt wird (17; 46), und
- das erste System (2) die vom zweiten System (3) geschickte Nachricht (16; 45) und das zurückgeschickte Taktsignal (17; 46) verzögert und im Wesentlichen in Phase empfängt.

2. Verfahren nach Anspruch 1, wobei die Verbindung eine Verbindung (4) von der Art Serial Peripheral Interface (SPI) ist.

3. Verfahren nach Anspruch 1 oder 2, wobei das erste System (2) Master und das zweite System (3) Slave ist.

4. Verfahren nach einem der Ansprüche 1 bis 3, wobei ein galvanisches Trennelement (22; 52, 53) zwischen das erste System (2) und das zweite System (3) eingefügt ist, und wobei die synchron-serielle Full-Duplex-Verbindung (4) dieses Trennelement durchquert.

5. Verfahren nach einem der Ansprüche 1 bis 3, wobei kein galvanisches Trennelement von der synchronseriellen Full-Duplex-Verbindung (4) durchquert wird, und wobei die Verbindung (4) eine Länge von mehr als einigen Metern hat, insbesondere von mehr als drei Metern.

6. Verfahren nach einem der Ansprüche 1 bis 5, wobei die synchron-serielle Full-Duplex-Verbindung (4) eine Übertragungsrate von mehr als oder gleich 5 Mbits/s, insbesondere 10 Mbits/s, insbesondere in der Größenordnung von 20 Mbits/s hat.

7. Verfahren nach einem der Ansprüche 1 bis 6, wobei das erste System (2) Master ist und eine programmierbare Logikschaltung (FPGA) enthält.

8. Verfahren nach einem der Ansprüche 1 bis 6, wobei das erste System (2) Slave ist und einen Mikrocontroller oder einen Mikroprozessor enthält.

9. Verfahren nach einem der vorhergehenden Ansprüche, wobei die von der Verbindung (4) beförderten Daten Tastverhältniswerte, die dazu bestimmt sind, an Unterbrecher eines Wechselrichters angewendet zu werden, und Werte eines gemessenen Stroms enthalten.

10. Verfahren nach Anspruch 9, wobei eines vom ersten System (2) und zweiten System (3) mit einem Generator (8) von Tastverhältniswerten interagiert und das andere vom ersten System (2) und zweiten System (3) mit einem elektrischen Schaltkreis interagiert, der einen Wechselrichter und einen Elektromotor (6) aufweist.

11. Synchron-serielle Full-Duplex-Verbindung (4) zwischen mindestens einem ersten System (2) und mindestens einem zweiten System (3), wobei die Verbindung (4) enthält:
- einen ersten Draht (30), der sich zwischen den Systemen (2, 3) erstreckt und die Übertragung einer Nachricht (von Nachrichten) (12; 43) vom ersten System (2) zum zweiten System (3) erlaubt,
- einen zweiten Draht (32), der sich zwischen den Systemen (2, 3) erstreckt und die Übertragung einer Nachricht (von Nachrichten) (16; 45) vom zweiten System (3) zum ersten System (2) erlaubt, und
- einen dritten Draht (31), der sich zwischen den Systemen (2, 3) erstreckt und die Übertragung eines vom ersten System (2) erzeugten Taktsignals (13; 44) an das zweite System (3) erlaubt,
wobei die Verbindung (4) **dadurch gekennzeichnet ist, dass** sie außerdem einen vierten Draht (33) aufweist, der eine Zone (35) des dritten Drahts (31) und das erste System (2) verbindet und es erlaubt, das vom zweiten System (3) empfangene Taktsignal (13; 44) an das erste System (2) mit einer Nachricht (16; 45) zurückzuschicken, die vom zweiten System (3) auf dem zweiten Draht geschickt wird, so dass das erste System (2) die vom zweiten System (3) geschickte Nachricht (16; 45) und das zurückgeschickte Taktsignal (17; 46) verzögert und im Wesentlichen in Phase empfängt.

12. Verbindung nach Anspruch 11, wobei die Zone (35) des dritten Drahts (31) so auf dem dritten Draht (31) positioniert ist, dass an das erste System (2) ein Taktsignal im Wesentlichen gleich demjenigen zurückgeschickt wird, das vom zweiten System (3) empfangen wird.

13. Galvanisch getrenntes Kommunikationssystem zwischen einem ersten System (2) und einem zweiten System (3), das enthält:
- die Verbindung (4) nach Anspruch 11 oder 12, und
- ein von der Verbindung durchquertes galvanisches Trennelement (22; 52, 53), wobei die Zone (35) des dritten Drahts (31) stromabwärts hinter dem Trennelement (22; 52, 53) angeordnet ist, wenn die Verbindung (4) vom ersten System (2) zum zweiten System (3) durchlaufen wird.

14. Einheit (1), die enthält:
- das Kommunikationssystem nach Anspruch 13,
- ein erstes Master-System (2), das insbesondere eine programmierbare Logikschaltung (FPGA) enthält, und
- ein zweites Slave-System (3),
wobei die Verbindung (4) keinen anderen Draht als den ersten (30), zweiten (32), dritten (31) und vierten (33) Draht aufweist.

15. Einheit (1), die enthält:
- das Kommunikationssystem nach Anspruch 13,
- ein erstes Slave-System (2), das insbesondere einen Mikrocontroller oder einen Mikroprozessor enthält, und
- ein zweites Master-System (3),
wobei die Verbindung (4) einen fünften Draht (51) aufweist, der das erste System (2) verbindet und das galvanische Trennelement durchquert.

## Claims

1. Method for communicating between at least one first system (2) and at least one second system (3) by way of a full-duplex synchronous serial link (4) being able to simultaneously route between said systems (2,3) data comprising: at least one message (12; 43) from the first system (2) to the second system (3), at least one message (16; 45) from the second system (3) to the first system (2) and a clock signal (13;44),
a method in which:
- the second system (3) receives a message (12;43) and a clock signal (13;44) sent by the first system (2), delayed and substantially in phase,
- the second system (3) sends a message (16;45) to the first system (2),
the method being **characterized in that**:
- the clock signal (13;44) received by the second system (3) is sent back (17;46) to the first system (2) with said message (16; 45) sent by the second system (3), and
- the first system (2) receives the message (16;45) sent by the second system (3) and the sent-back clock signal (17;46), delayed and substantially in phase.

2. Method according to Claim 1, wherein the link is a link (4) of Serial Peripheral Interface (SPI) type.

3. Method according to Claim 1 or 2, wherein the first system (2) is master and wherein the second system (3) is slave.

4. Method according to any one of Claims 1 to 3, wherein galvanic isolation (22;52,53) is interposed between the first system (2) and the second system (3) and wherein the full-duplex synchronous serial link (4) crosses this isolation.

5. Method according to any one of Claims 1 to 3, wherein no galvanic isolation is crossed by the full-duplex synchronous serial link (4) and wherein the link (4) has a length of above a few meters, particularly above three meters.

6. Method according to any one of Claims 1 to 5, wherein the full-duplex synchronous serial link (4) has a speed above or equal to 5Mbits/s, particularly to 10Mbits/s, particularly in the order of 20Mbits/s.

7. Method according to any one of Claims 1 to 6, wherein the first system (2) is master and comprises a programmable logic circuit (FPGA).

8. Method according to any one of Claims 1 to 6, wherein the first system (2) is slave and comprises a microcontroller or a microprocessor.

9. Method according to any one of the preceding claims, wherein the data routed over the link (4) comprise duty cycle values intended to be applied to switches of an inverter and measured current values.

10. Method according to Claim 9, wherein one of the first system (2) and the second system (3) interacts with a generator (8) of duty cycle values and the other of the first system (2) and the second system (3) interacts with an electrical circuit comprising an inverter and an electric motor (6).

11. Full-duplex synchronous serial link (4) between at least one first system (2) and at least one second system (3), the link (4) comprising:
- a first wire (30) running between said systems (2,3) and allowing the transmission of a message or messages (12; 43) from the first system (2) to the second system (3),
- a second wire (32) running between said systems (2,3) and allowing the transmission of a message or messages (16;45) from the second system (3) to the first system (2), and
- a third wire (31) running between said systems (2,3) and allowing the transmission of a clock signal (13;44) generated by the first system (2) to the second system (3),
the link (4) being **characterized in that** it furthermore includes a fourth wire (33) linking an area (35) of the third wire (31) and the first system (2) and making it possible to send back the clock signal (13;44) received by the second system (3) to the first system (2) with a message (16;45) sent by the second system (3) over the second wire, so that the first system (2) receives said message (16;45) sent by the second system (3) and the sent-back clock signal (17;46), delayed and substantially in phase.

12. Link according to Claim 11, the area (35) of the third wire (31) being positioned on the third wire (31) in such a way as to send back to the first system (2) a clock signal substantially identical to that received by the second system (3).

13. Communication system galvanically isolated between one first system (2) and one second system (3), comprising:
- the link (4) according to Claim 11 or 12, and
- galvanic isolation (22;52,53) crossed by the link, said area (35) of the third wire (31) being arranged downstream of the isolation (22;52,53) when the link (4) is travelled from the first system (2) in the direction of the second system (3).

14. Assembly (1), comprising:
- the communication system according to Claim 13,
- a first master system (2), particularly comprising a programmable logic circuit (FPGA), and
- a second slave system (3),
the link (4) being devoid of any wire other than the first (30), second (32), third (31) and fourth (33) wire.

15. Assembly (1), comprising:
- the communication system according to Claim 13,
- a first slave system (2), particularly comprising a microcontroller or a microprocessor, and
- a second master system (3),
the link (4) including a fifth wire (51) linking the first system (2) and crossing the galvanic isolation.
